# FASCICULE DE BREVET EUROPEEN

(11) **EP 0 663 287 B1**
(45) Date de publication et mention de la délivrance du brevet: **02.06.1999**
(21) Numéro de dépôt: 94402977.6
(22) Date de dépôt: 21.12.1994
(51) Int. Cl.: B32B 31/00, D06M 17/04, A41H 43/04, B30B 5/06

(54) **Presse à contrecoller**
Presse zum Verkleben von Textilbahnen
Press for bonding textile webs

(30) Priorité: 24.12.1993 FR 9315641
(43) Date de publication de la demande: 19.07.1995
(73) Titulaire: LAINIERE DE PICARDIE, 80202 Péronne Cédex (FR)
(72) Inventeur: Groshens, Pierrot, F-80200 Peronne (FR); Trabelsi, Mohamed Foued, F-80200 Peronne (FR)
(74) Mandataire: Derambure, Christian

(56) Documents cités:
- DE-A- 4 205 746
- FR-A- 2 001 893
- GB-A- 2 134 447
- GB-A- 2 170 446
- L'INDUSTRIE TEXTILE, PARIS FR, page 67 'Film adhésif réticulable'

## Description

L'invention concerne une presse à contrecoller. Plus particulièrement, l'invention concerne une presse à contrecoller destinée à contrecoller sur une draperie un entoilage thermocollant comportant un support textile associé à une ou plusieurs couche(s) adhésive(s) de polymères thermo-adhésifs et/ou thermoréticulables.

De manière générale, les entoilages thermocollants doivent pouvoir être stockés après que le support textile ait reçu la couche de polymères et ils sont destinés, par l'effet de la variation de paramètres extérieurs à devenir collants, permettant ainsi leur adhésion sur un autre tissu ou draperie.

Les produits thermocollants sont maintenant couramment utilisés dans l'industrie textile par exemple, comme tissu de renfort, leur application sur les doublures ou sur les draperies permettant de modifier les caractéristiques des tissus, améliorant ainsi leur tenue et leur nervosité. Les supports textile mis en oeuvre sont très variés. Ils peuvent être tissés, tricotés ou non tissés.

Les modalités d'application de la couche thermo-adhésive sur son support sont nombreuses. Pour de nombreux usages, une application par points permettant de conserver une grande souplesse de tissu est préférée alors que pour d'autres usages, une couche continue d'adhésif permet mieux d'atteindre les propriétés recherchées.

Dans le cas d'un tissu de renfort, le support textile est enduit avec la substance thermocollante. Actuellement cette enduction est le plus souvent une enduction par points réalisée suivant les techniques héliographiques (poudre-point à l'aide d'un cylindre gravé) ou sérigraphique (point pâte à l'aide d'un cadre rotatif). Les polymères thermocollants initialement sous forme de poudre ou de pâte sont portés à une température qui leur permet d'entrer en fusion et d'adhérer au support.

L'entoilage thermocollant ainsi obtenu est ensuite stocké à température ambiante. Il est alors nécessaire que les différentes couches de ce produit, en contact, n'adhèrent pas les unes avec les autres. L'entoilage thermocollant ne doit pas présenter un effet poisseux et des propriétés adhésives à température ambiante.

Au cours de ce stockage, il est également nécessaire que le processus de vieillissement du produit n'entrave pas ses propriétés d'adhésion nécessaires au contrecollage ultérieur.

L'entoilage thermocollant est alors utilisé par les confectionneurs qui l'appliquent contre d'autres tissus, draperies ou doublures et réalisent ainsi le contrecollage de l'entoilage sur la draperie à l'aide d'une presse, à des pressions de quelques décibars à quelques bars, pendant des temps relativement courts de l'ordre de 10 à 30 secondes et à des températures généralement supérieures à 100°C. Au cours de cette phase, les polymères de l'entoilage thermocollant doivent retrouver leur propriété d'adhésion. Toutefois, ils ne doivent pas avoir une trop faible viscosité pendant un temps trop long lors de cette opération, car sinon le polymère traverse le support textile ou la draperie causant des problèmes de retour et traversée qui rendent les produits obtenus peu attractifs et souvent inutilisables.

Enfin, le vêtement terminé, et donc en particulier les draperies ou doublures munies d'entoilage, doivent supporter les différents modes d'utilisation, le lavage, le repassage, etc. Le collage réalisé à l'étape précédente doit donc résister à des traitements d'entretien difficiles.

De nombreuses tentatives ont été faites pour réaliser des produits bien adaptés aux différentes contraintes résultant de l'ensemble des phases mentionnées plus haut.

Ainsi, il a été proposé par exemple de réaliser un entoilage thermocollant comportant un support textile associé à une ou plusieurs couche(s) adhésive(s) de polymères thermo-adhésifs et/ou thermoréticulables. Ce type d'entoilage est destiné à être commercialisé tel quel au confectionneur qui le contrecollera sur une draperie ou doublure au moyen d'une presse à contrecoller.

Cependant, bien que les presses classiques pour thermosouder des pièces de tissus présentent l'avantage de maintenir en contact les deux bases textiles (entoilage et draperie) en permanence et en continu tout en chauffant pendant une période suffisante pour obtenir le collage, elles ne permettent pas de réaliser en plus du thermosoudage une opération supplémentaire qui peut être, par exemple, une réaction de réticulation de la couche adhésive.

En effet, dans ce type de presse à thermosouder, la conception ainsi que le temps, qui reste limité, pour maintenir en température l'entoilage thermocollant et la draperie ne permettent pas de réaliser successivement et en continu les deux opérations de collage et de réticulation, aboutissant de ce fait à un complexe entoilage/draperie ne remplissant pas le cahier des charges, notamment en ce qui concerne l'absence de retour de traversée et la résistance au lavage à température élevée, au repassage, etc.

Cette contrainte nécessite une presse possédant au moins deux zones distinctes mais successives et n'occasionnant pas de surfaces d'occupation au sol supplémentaire par rapport aux presses connues de l'état de la technique.

Une presse à contrecoller présentant deux tapis de transport passant dans une zone chauffée, puis etre deux rouleaux de pression linéaire, dans un dispositif de pression de surface et enfin un dispositif de retour, est divulguée par le document GB-A-2 170 446.

Un premier objet de la présente invention est donc de proposer une presse à contrecoller qui, d'une part, permet de pallier les limites ou inconvénients mentionnés ci-dessus et, d'autre part, présente une surface d'occupation au sol semblable aux presses connues de l'état de la technique, avec un parcours modifié permettant d'adapter et de contrôler la température dans chaque zone de ce parcours et dont le but est de pouvoir réaliser des opérations supplémentaires en plus du thermosoudage.

Un autre objet de la présente invention est de proposer une presse à contrecoller qui soit en combinaison fiable, économique, rapide et nécessitant une fréquence de maintenance faible.

Plus particulièrement, le but de la présente invention est de proposer une presse à contrecoller destinée à contrecoller sur une draperie un entoilage thermocollant comportant un support textile associé à une couche adhésive du type comportant à la fois au moins un système collant et au moins un système réticulable.

A cet effet, l'invention propose une presse à contrecoller destinée à contrecoller sur une draperie un entoilage thermocollant comportant un support textile associé à une ou plusieurs couche(s) adhésive(s) de polymères thermo-adhésifs et/ou thermoréticulables, du type comprenant une zone de collage, chauffée à la température de ramollissement du ou des polymère(s), dans laquelle le complexe entoilage-draperie est emprisonné entre deux tapis de transport supérieur et inférieur puis comprimé entre deux cylindres compresseurs supérieur et inférieur, caractérisée en ce que le complexe entoilage-draperie emprisonné entre les deux tapis de transport passe par une seconde zone chauffée à une température supérieure ou égale à la température de ramollissement du ou des polymère(s), de manière à permettre la réaction chimique de pontage des polymères thermoréticulables de la couche adhésive de l'entoilage.

La première zone est dédiée uniquement au thermosoudage, la deuxième zone, permettant de réaliser des opérations supplémentaires (par exemple la réticulation de la couche adhésive après avoir réalisé complétement l'opération du thermosoudage dans la première zone), doit être indépendante afin que les contraintes de température et de pression puissent être appliquées différemment dans les deux zones.

Selon un mode de réalisation préféré de l'invention, le complexe entoilage/draperie emprisonné entre les deux tapis de transport passe par une troisième zone chauffée à une température supérieure ou égale à la température de ramollissement du ou des polymère(s).

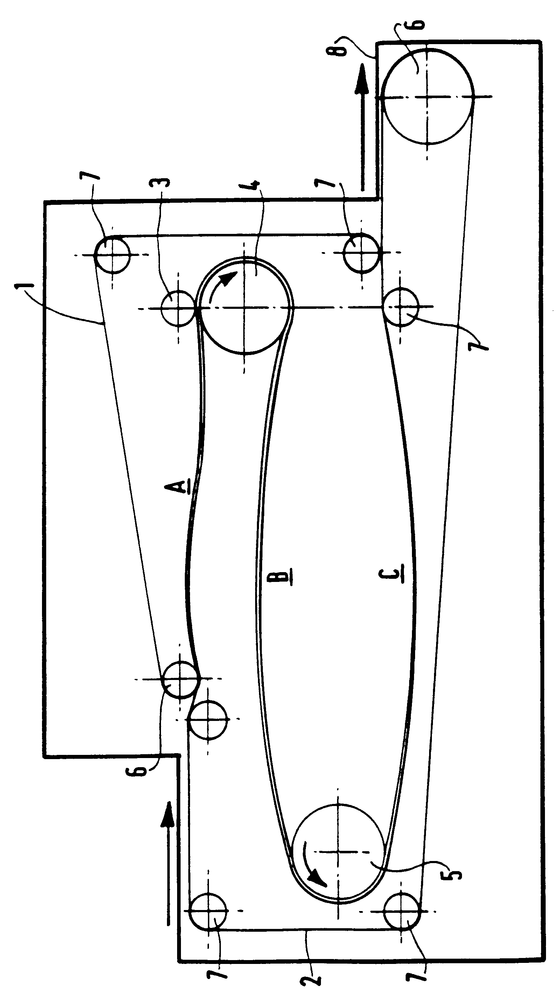

Les autres avantages et caractéristiques de l'invention seront bien compris à la lecture de la description qui suit en référence à la figure unique annexée qui est une vue schématique de côté de la presse à contrecoller conforme à la présente invention.

L'invention concerne donc une presse à contrecoller destinée à contrecoller sur une draperie un entoilage thermocollant comportant un support textile associé à une ou plusieurs couche(s) adhésive(s) de polymères thermo-adhésifs et/ou thermoréticulables.

La presse à contrecoller conforme à la présente invention est destinée à réaliser les opérations de thermosoudage et de réticulation, assurant le contrecollage de l'entoilage sur la draperie, successivement et en continu.

Pour ce faire, l'entoilage et la draperie, placés l'un sur l'autre, sont transportés de façon continue par un tapis de transport inférieur 2, la draperie reposant de préférence directement sur le tapis de transport inférieur 2.

De façon connue, la presse à contrecoller comprend une zone de collage A chauffée à la température de ramollissement du ou des polymère(s) thermo-adhésifs et/ou thermoréticulables. Dans cette zone de collage A, le complexe entoilage/draperie est emprisonné entre un tapis de transport supérieur 1 et le tapis de transport inférieur 2, puis comprimé entre deux cylindres compresseurs supérieur 3 et inférieur 4.

En d'autres termes, dans cette zone de collage A, le complexe entoilage/draperie est emprisonné entre les deux tapis de transport 1, 2 et passe dans une zone chauffée à une température comprise, par exemple, entre 80 et 130°C, et pendant un temps de l'ordre de quelques secondes. Au cours de cette montée en température, le ou les polymères de la couche adhésive se ramollissent ou se fluidifient sous l'effet de la chaleur, s'accrochent ainsi mécaniquement sur les fibres des deux bases textiles (entoilage et draperie) tout en les mouillant sans y pénétrer de façon excessive.

A l'extrémité de cette zone, les deux tapis de transport 1, 2 maintiennent toujours le complexe entoilage/draperie en chauffe, passent entre les deux cylindres compresseurs (3, 4), la pression appliquée est alors de l'ordre de quelques bars et pendant une durée relativement courte de l'ordre de quelques fractions de secondes pour réaliser l'adhésion et l'assemblage de l'entoilage à la draperie.

Selon l'invention, le complexe entoilage/draperie emprisonné entre les deux tapis de transport 1, 2 passe par une seconde zone B chauffée à une température supérieure ou égale à la température de ramollissement du ou des polymère(s), de manière à permettre la réaction chimique de pontage des polymères réticulables de la couche adhésive de l'entoilage.

A cet effet, dans la seconde zone B, le cylindre inférieur 4 n'est plus un cylindre compresseur mais un cylindre de retour pour le complexe entoilage/draperie emprisonné entre les deux tapis de transport 1, 2, ce cylindre de retour 4 ayant pour fonction d'inverser la direction de transport de la seconde zone B par rapport à celle de la zone de collage A.

En d'autres termes, le complexe entoilage/draperie emprisonné entre les deux tapis de transport 1, 2 épouse la périphérie du cylindre de retour 4 sur un débattement angulaire de 180°.

Dans cette seconde zone B, aucune pression n'est appliquée sur le complexe entoilage/draperie. Seul l'accrochage mécanique des polymères sur les fibres des deux bases textiles (entoilage/draperie) obtenu dans la zone A est maintenu uniquement du fait de l'emprisonnement du complexe entoilage/draperie entre les deux tapis.

La seconde zone B est chauffée par des moyens de chauffage situés sensiblement du côté de l'entoilage.

On entend par sensiblement situés du côté de l'entoilage, le fait que les moyens de chauffage sont en contact avec le tapis de transport supérieur 1, sur lequel repose l'entoilage, par opposition à la draperie qui est plaquée contre le tapis de transport inférieur 2.

Selon une autre caractéristique de l'invention, le complexe entoilage/draperie emprisonné entre les deux tapis de transport 1, 2 passe par une troisième zone C chauffée à une température supérieure ou égale à la température de ramollissement du ou des polymère(s) thermoréticulables.

La direction de transport de la troisième zone C est inversée par rapport à celle de la seconde zone au moyen d'un cylindre de retour 5.

Comme mentionné ci-dessus pour la seconde zone B, dans cette troisième zone C, aucune pression n'est appliquée sur le complexe entoilage/draperie. Seul l'accrochage mécanique des polymères sur les fibres des deux bases textiles (entoilage/draperie) obtenu dans la zone A est maintenu uniquement du fait de l'emprisonnement du complexe entoilage/draperie entre les deux tapis.

Egalement comme mentionné ci-dessus pour la seconde zone B, la troisième zone C est chauffée par des moyens de chauffage situés sensiblement du côté de l'entoilage.

On comprend de tout ce qui précède qu'à la sortie des deux cylindres compresseurs 3, 4, les deux tapis de transport 1, 2 maintiennent le complexe entoilage/draperie assemblé en contact intime pour empêcher tout déplacement des deux substrats textiles l'un par rapport à l'autre et passe dans les deux zones B, C de réticulation, chauffée à une température bien précise supérieure ou égale à la température de thermosoudage, par exemple 150°C pendant le temps nécessaire, compris par exemple entre 10 et 60 secondes, pour que la réaction chimique de pontage du système réticulable se produise, créant ainsi une structure réticulée tri-dimensionnelle résistant à la chaleur et aux solvants (eau, agents chimiques).

De manière préférée, les seconde et troisième zones B, C présentent une courbure permettant un contact intime entre la draperie et l'entoilage.

En outre, la presse à contrecoller conforme à la présente invention, comprend des moyens d'entraînement 6 des tapis de transport 1, 2 et de guidage 7 des tapis de transport 1, 2, agencés de manière à assurer un trajet commun des tapis de transport supérieur 1 et inférieur 2 dans la zone de collage A et les seconde et troisième zones B, C et un trajet différent des tapis de transport supérieur 1 et inférieur 2 en dehors de ces zones.

De plus, la presse à contrecoller conforme à l'invention comprend en sortie de la seconde zone B ou de la troisième zone C, un moyen de refroidissement (par exemple par circulation d'air) du complexe entoilage/draperie de manière à figer totalement les polymères.

Bien que seuls certains modes de réalisation de l'invention aient été décrits, il est évident que toute modification apportée dans le même esprit par l'homme du métier ne sortirait pas du cadre de la présente invention.

## Revendications

1. Presse à contrecoller destinée à contrecoller sur une draperie un entoilage thermocollant comportant un support textile associé à une ou plusieurs couche(s) adhésive(s) de polymères thermo-adhésifs et/ou thermoréticulables, du type comprenant une zone de collage (A), chauffée à la température de ramollissement du ou des polymère(s), dans laquelle le complexe entoilage/draperie est emprisonné entre deux tapis de transport supérieur (1) et inférieur (2) puis comprimé entre deux cylindres compresseurs supérieur (3) et inférieur (4), caractérisée en ce que les deux tapis de transport (1, 2) passent par une seconde zone (B) dans laquelle les deux tapis maintiennent l'accrochage du complexe entoilage/draperie uniquement par emprisonnement de l'entoilage et de la draperie entre eux, cette zone B étant chauffée à une température supérieure ou égale à la température de ramollissement du ou des polymère(s), de manière à permettre la réaction chimique de pontage des polymères thermoréticulables de la couche adhésive de l'entoilage, le cylindre inférieur (4) étant un cylindre de retour pour le complexe entoilage/draperie emprisonné entre les deux tapis de transport (1, 2), ayant pour fonction d'inverser la direction de transport de la seconde zone (B) par rapport à celle de la Zone de collage (A).

2. Presse à contrecoller selon la revendication 1, caractérisée en ce que la seconde zone (B) est chauffée par des moyens de chauffage situés sensiblement du côté de l'entoilage.

3. Presse à contrecoller selon la revendication 1 ou 2, caractérisée en ce que la seconde zone (B) présente une courbure.

4. Presse à contrecoller selon l'une quelconque des revendications 1 à 3, caractérisée en ce que les deux tapis de transport (1, 2) passent par une troisième zone (C) chauffée à une température supérieure ou égale à la température de ramollissement du ou des polymère(s), dans laquelle les deux tapis maintiennent uniquement par emprisonnement de l'entoilage et draperie entre eux l'accrochage du complexe entoilage/draperie, la direction de transport de la troisième zone (C) étant inversée par rapport à celle de la seconde zone (B) au moyen d'un cylindre de retour (5).

5. Presse à contrecoller selon la revendication 4, caractérisée en ce que la troisième zone (C) est chauffée par des moyens de chauffage situés sensiblement du côté de l'entoilage.

6. Presse à contrecoller selon la revendication 4 ou 5, caractérisée en ce que la troisième zone (C) présente une courbure.

7. Presse à contrecoller selon l'une quelconque des revendications 1 à 6, caractérisée en ce qu'elle comprend des moyens d'entraînement (6) des tapis de transport (1, 2) et de guidage (7) des tapis de transport (1, 2), agencés de manière à assurer un trajet commun des tapis de transport supérieur (1) et inférieur (2) dans la zone de collage (A) et les seconde et troisième zones (B, C) et un trajet différent des tapis de transport supérieur (1) et inférieur (2) en dehors de ces zones.

8. Presse à contrecoller selon l'une quelconque des revendications 1 à 7, caractérisée en ce qu'elle comprend en sortie de la seconde zone (B) ou de la troisième zone (C) un moyen de refroidissement (8) du complexe entoilage/draperie.

## Claims

1. A bonding press designed for bonding onto a drapery a thermofusing interlining comprising a textile support associated with one or several adhesive layer(s) of thermo-adhesive and/or cross-linkable polymers, of the type comprising a bonding zone (A), heated to the softening temperature of the polymer(s), in which the interlining /drapery complex is trapped between two upper (1) and lower (2) conveyor belts, then pressed between two upper (3) and lower (4) pressing rolls, characterised in that both conveyor belts (1, 2) go through a second zone (B) in which both belts maintain the adherence of the fabric interlining/drapery complex solely by mutual trapping of the interlining and of the drapery, this zone (B) being heated to a temperature equal to or above the softening temperature of the polymer(s), in order to enable curing chemical reaction of the thermo-cross-linkable polymers of the interlining adhesive layer, the lower roll (4) being a return roll for the interlining/drapery complex trapped between both conveyor belts (1, 2), whose function consists in reverting the transport direction of the second zone (B) in relation to that of the bonding zone (A).

2. A bonding press according to claim 1, characterised in that the second zone (B) is heated by heating means located more or less on the interlining side.

3. A bonding press according to claim 1 or 2, characterised in that the second zone (B) is bent.

4. A bonding press according to any of the claims 1 to 3, characterised in that both conveyor belts (1, 2) go through a third zone (c) heated to a temperature equal to or above the softening temperature of the polymer(s), in which the two belts maintain the adherence of the interlining/drapery complex solely by trapping of the interlining with the drapery, the transport direction of the third zone (C) being reverted with respect to that of the second zone (B) via a return roll (5).

5. A bonding press according to claim 4, characterised in that the third zone (C) is heated by heating means located more or less on the interlining side.

6. A bonding press according to claim 4 or 5, characterised in that the third zone (C) is bent.

7. A bonding press according to any of the claims 1 to 6, characterised in that it comprises means (6) for driving the conveyor belts (1, 2) and means (7) for guiding the conveyor belts (1, 2), arranged in order to provide a common trajectory of the upper (1) and lower (2) conveyor bolts in the bonding zone (A) as well as the second and third zones (B, C) and a different trajectory of the upper (1) and lower (2) conveyor belts outside these zones.

8. A bonding press according to any of the claims 1 to 7, characterised in that it comprises at the output of the second zone (B) or of the third zone (C) a means (8) for cooling the interlining/drapery complex.

## Patentansprüche

1. Kaschierpresse zum Kaschieren auf ein Tuch eines schmelzfixierenden Einlagestoffes, bestehend aus einem Textilträger, der einer oder mehreren klebenden Schicht(en) aus thermoklebenden und/oder thermovernetzbaren Polymeren zugeordnet ist, des Typs mit einer Klebezone (A), die auf die Erweichungstemperatur des Polymers oder der Polymere erwärmt wird, in der die Verbindung Einlagestoff/Tuch zwischen einem oberen (1) und einem unteren (2) Transportband eingeschlossen und zwischen einer oberen (3) und einer unteren (4) Druckwalze zusammengedrückt wird, dadurch gekennzeichnet, dass die beiden Transportbänder (1, 2) durch eine zweite Zone (B) laufen, in der die beiden Bänder die Verbindung Einlagestoff/Tuch nur durch den Einschluss des Einlagestoffes und des Tuches zwischen ihnen festhalten, wobei diese Zone (B) auf eine Temperatur erwärmt wird, die höher oder gleich der Erweichungstemperatur des Polymers oder der Polymere ist, um die chemische Überbrückungsreaktion der thermovernetzbaren Polymere der Klebeschicht des Einlagestoffes zu ermöglichen, wobei die untere Walze (4) eine Umlenkwalze für die zwischen den beiden Transportbändern (1, 2) eingeschlossene Verbindung Einlagestoff/Tuch ist und zur Funktion hat, die Transportrichtung der zweiten Zone (B) in Bezug auf diejenige der Klebezone (A) umzudrehen.

2. Kaschierpresse nach Anspruch 1, dadurch gekennzeichnet, dass die zweite Zone (B) von Heizmitteln erwärmt wird, die sich etwa auf der Einlagestoffseite befinden.

3. Kaschierpresse nach Anspruch 1 oder 2, dadurch gekennzeichnet, dass die zweite Zone (B) eine Krummung aufweist.

4. Kaschierpresse nach einem der Ansprüche 1 bis 3, dadurch gekennzeichnet, dass die beiden Transportbänder (1, 2) eine dritte Zone (C) durchlaufen, die auf eine höhere oder gleiche Temperatur erwärmt wird als die Erweichungstemperatur des Polymers oder der Polymere, in der die beiden Bänder die Verbindung Einlagestoff/Tuch nur durch den Einschluss des Einlagestoffes und des Tuches zwischen ihnen festhalten, wobei die Transportrichtung der dritten Zone (C) in Bezug auf diejenige der zweiten Zone (B) mittels einer Umlenkwalze (5) umgekehrt wird.

5. Kaschierpresse nach Anspruch 4, dadurch gekennzeichnet, dass die dritte Zone (C) von Heizmitteln erwärmt wird, die etwa auf der Einlagestoffseite angeordnet sind.

6. Kaschierpresse nach Anspruch 4 oder 5, dadurch gekennzeichnet, dass die dritte Zone (C) eine Krümmung aufweist.

7. Kaschierpresse nach einem der Ansprüche 1 bis 6, dadurch gekennzeichnet, dass sie Antriebsmittel (6) der Transportbänder (1, 2) und Führungsmittel (7) der Transportbänder (1, 2) umfasst, die so angeordnet sind, dass sie einen gemeinsamen Weg des oberen (1) und unteren (2) Transportbandes in der Klebezone (A) und in der zweiten und dritten Zone (B, C), und einen unterschiedlichen Weg des oberen (1) und unteren (2) Transportbandes ausserhalb dieser Zonen gewährleisten.

8. Kaschierpresse nach einem der Ansprüche 1 bis 7, dadurch gekennzeichnet, dass sie am Ausgang der zweiten Zone (B) oder der dritten Zone (C) ein Kühlmittel (8) der Verbindung Einlagestoff/Tuch umfasst.
